# EUROPEAN PATENT SPECIFICATION

(11) **EP 0 770 831 B1**
(45) Date of publication and mention of the grant of the patent: **19.12.2001**
(21) Application number: 97100232.4
(22) Date of filing: 24.02.1994
(51) Int. Cl.: F24F 13/075, F16K 1/16

(54) **Air-direction adjusting apparatus in air-conditioning equipment**
Gerät zur Anpassung der Richtung der Luftströmung in einem Klimagerät
Dispositif d'ajustement de la direction de souflage d'air pour appareils de conditionnement d'air

(30) Priority: 05.03.1993 JP 4514293; 24.08.1993 JP 20941993
(43) Date of publication of application: 02.05.1997
(62) Divisional of application: 94301305.2
(73) Proprietor: MITSUBISHI DENKI KABUSHIKI KAISHA, Tokyo 100 (JP)
(72) Inventor: Kotoh, Satoru, c/o Mitsubishi Denki K.K., Amagasaki-shi, Hyogo 661 (JP); Kiyoshi, Sakuma, c/o Mitsubishi Denki K.K., Shizuoka-shi, Shizuoka 422 (JP); Takayuki, Yoshido, c/o Mitsubishi Denki K.K., Shizuoka-shi, Shizuoka 422 (JP); Hiromi, Sano, c/o Mitsubishi Denki K.K., Shizuoka-shi, Shizuoka 422 (JP); Katuyuki, Aoki c/o Mitsubishi Denki K.K., Shizuoka-shi, Shizuoka 422 (JP); Shin'ichi, Suzuki c/o Mitsubishi Denki K.K., Shizuoka-shi, Shizuoka 422 (JP); Hideaki, Koizumi c/o Mitsubishi Elec. Eng. Co. Ltd, 3-chome, Shizuoka-shi, Shizuoka 422 (JP); Kaoru, Yamamoto c/o Mitsubishi Elec. Eng. Co. Ltd., 3-chome, Shizuoka-shi, Shizuoka 422 (JP); Kunio, Matsushita, c/o Mitsubishi Elec. Eng. Co., 3-chome, Shizuoka-shi, Shizuoka 422 (JP); Kenichi, Unno, c/o Mitsubishi Elec. Eng. Co. Ltd., 3-chome, Shizuoka-shi, Shizuoka 422 (JP); Tomoko, Oguma, c/o Mitsubishi Denki K.K., Shizuoka-shi, Shizuoka 422 (JP)
(74) Representative: Godwin, Edgar James

(56) References cited:
- PATENT ABSTRACTS OF JAPAN vol. 013, no. 065 (M-797), 14 February 1989 & JP 63 267861 A (MATSUSHITA ELECTRIC IND CO LTD), 4 November 1988,
- PATENT ABSTRACTS OF JAPAN vol. 013, no. 462 (M-881), 19 October 1989 & JP 01 181035 A (MATSUSHITA REFRIG CO LTD), 19 July 1989,

## Description

### BACKGROUND OF THE INVENTION

### a) Field of the Invention

The present invention relates to an air-direction adjusting apparatus in an air-conditioning equipment, which is disposed at a blow-outlet thereof.

### b) Description of Related Art

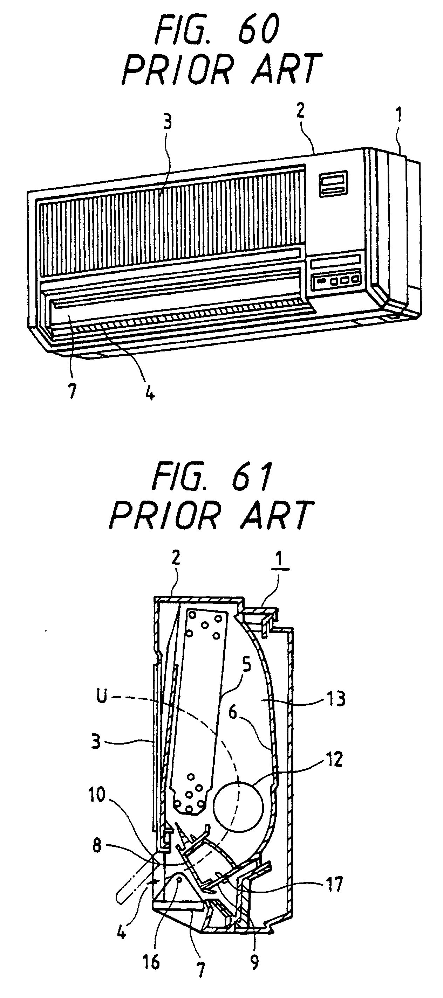

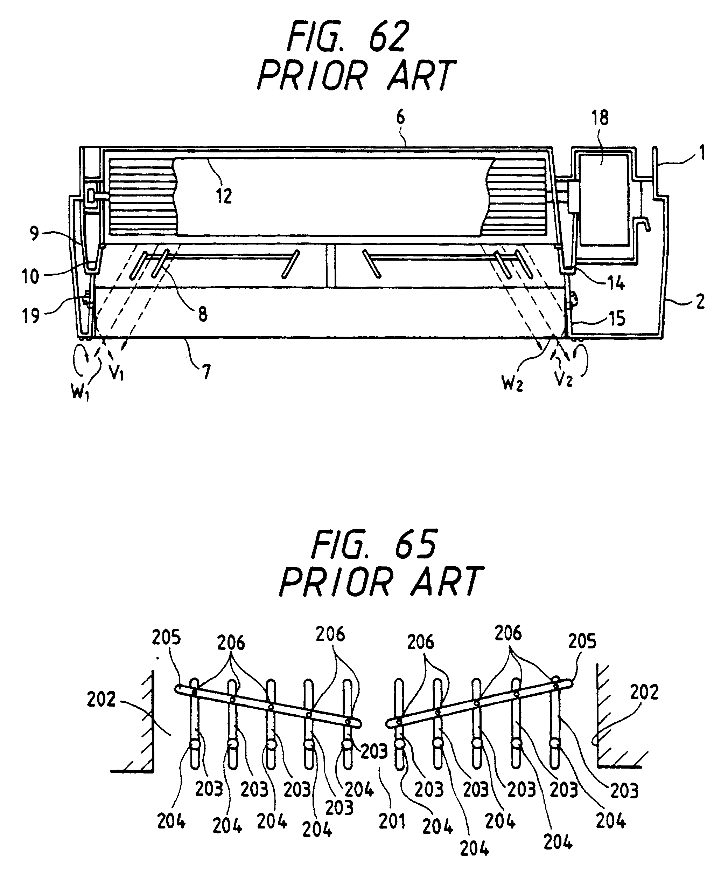

Figs. 60 to 62 are views showing an air-direction adjusting apparatus in a conventional air-conditioning equipment as disclosed in Japanese Utility Model Unexamined Publication No. Sho-58-69735. Fig. 60 is a perspective view of a body of the air-conditioning equipment; Fig. 61 is a cross section of Fig. 60; and Fig. 62 is a vertical section of Fig. 60.

In the drawings, the reference numeral 1 represents a body of an air-conditioning equipment; 2, a front panel having a suction inlet 3 and for covering the front surface of the body 1; 4, a blow-outlet having an opening at a front lower portion of the body 1; 5, a heat exchanger disposed so as to face the suction inlet 3; 6, a casing provided in the inside of the body 1 and for forming an air course 13; 7, a change vane provided at the blow-outlet 4 so as to be pivotally mounted to left and right side walls 11 and 15 of the front panel 2 by a shaft 16 mounted to left and right end portions of the blow-outlet 4 and for changing the air direction to the horizontal direction, the perpendicularly falling direction or an oblique direction; 8, a plurality of parallel guide vanes provided between walls 10 and 14 at left and right side portions of a blow-out nozzle 9 so as to be pivotally held by a pivotal shaft 17 and for changing the air direction to the left-rightwise direction; 9, a blow-out nozzle disposed under the casing 6 and cooperating with the casing 6 to form an air course; 12, a fan disposed on the air course 13 at the blow-out 4 and driven by the motor 18; and 19, coiled springs suspended from the shaft 16.

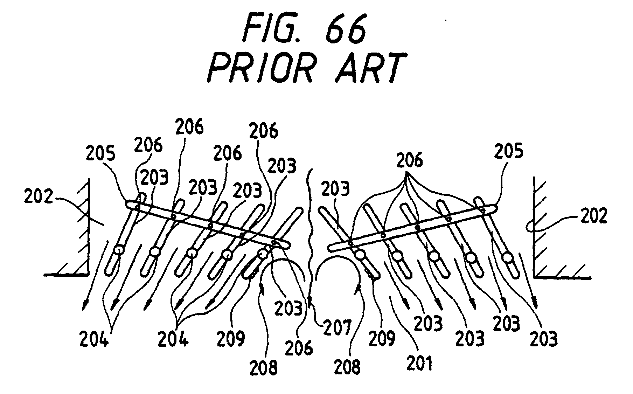

Figs. 65 and 66 are views showing another air-direction adjusting apparatus in a conventional air-conditioning equipment as disclosed in Japanese Utility Model Unexamined Publication No. Sho-63-147650. Fig. 65 is a cross section of the apparatus; and Fig. 66 is a view for explaining the operating state of the apparatus depicted in Fig. 65. In the drawings, the reference numeral 201 represents a blow-outlet; 202, an inner wall of the blow-outlet 201; and 203, a plurality of vanes disposed at substantially equal intervals and for changing the air direction. As shown in Fig. 65, the plurality of vanes 203 are divided into two groups and the respective groups each of which is composed of a plurality of vanes are provided in the left and right respectively in Fig. 65.

The reference numeral 204 represents shafts which are disposed for the vanes 203 respectively so as to be erected from the inner wall 202 and for pivotally holding the one-end side of an edge portion at one side of each of the vanes 203.

The reference numeral 205 represents connection arms each of which connects a group of vanes 203 and is provided with connection shafts 206 for pivotally holding the other-end side of the edge portion where the respective shafts 204 of the vanes 203 are disposed. As shown in Fig. 65, the connection shafts 206 are arranged in a line inclined with respect to a line connecting the respective shafts 204 of the vanes 203 so that the distance between the shaft 204 of the inner vane 203 and the connection shaft 206 in Fig. 65 is set to be shorter than the distance between the shaft 204 of the outer vane 203 and the connection shaft 206 in Fig. 65.

The other air-direction adjusting apparatus in the conventional air-conditioning equipment shown in Figs. 65 and 66 is configured as described above. In Fig. 66 the air- direction adjusting apparatus is used in the condition in which two groups of vanes 203 provided in the left and right respectively are arranged with their lower portions spread out. In this condition, the inclination of the inner vane 203 in Fig. 66 is nearer to the horizontal line than the inclination of the outer vane 203 in Fig. 66. Accordingly, the respective angles of blown air deflected by the vanes 203 are formed as represented by the solid arrows in Fig. 66 so that the inclination of the inner vane 203 is nearer to the horizontal line than the inclination of the outer vane 203.

Further, a narrow gap is formed at a center portion between the two groups of vanes 203. Accordingly, air 207 blown out through this gap cannot flow smoothly, so that the air 207 is weakened. As a result, secondary air 208 in the neighborhood of the air 207 is involved, so that dew 209 is produced in the vanes 203.

In the air-direction adjusting apparatus in the conventional air-conditioning equipment as shown in Figs. 65 and 66, it is necessary that the respective vanes 203 are produced while the distances between the shafts 204 and the connection shafts 206 are successively changed in accordance with the positions of the arrangement of the vanes 203. There arises a problem that troublesome labor is required for the production and assembling of the vanes 203.

Further, a narrow gap is formed in an intermediate portion between two groups of vanes 203. Accordingly, air 207 blown out through this gap is weak so that secondary air 208 in the neighborhood of the air 207 is involved. There arises a problem that dew 209 is generated in the vanes 203 and falls down.

In addition, there arises a problem that the rotating operations of the vanes 203 at the pivotally mounted portions thereof are made smoothless or noise is produced at the pivotally mounted portions.

JP-A-63 267 861 tackles the problem of dew production and discloses an arrangement to prevent condensation comprising a central vane with lateral projections between two sets of guide vanes.

### SUMMARY OF THE INVENTION

An object of the present invention is to provide an air-direction adjusting apparatus in an air-conditioning equipment in which dropping of dew from the vanes is reduced.

The invention provides an air-direction adjusting apparatus in an air-conditioning equipment, which comprises two sets of guide vanes which are disposed respectively to the left and right of a blow-outlet and which are rotatable in opposite directions to thereby change the air direction, whereby a narrow space is formed between the two sets of vanes, characterised in that at least the end guide vanes which are next to each other are provided with a plurality of dew-receiving cavities in their surfaces.

In the thus configured apparatus a narrow space is formed at a center portion where the two groups of vanes disposed respectively in the left and right of a blow-outlet are in opposition to each other. Since the air blown out through this space is weak, the air entrains secondary air in the circumstances and the dew drops generated by the vanes are reserved in the dew-receiving cavities.

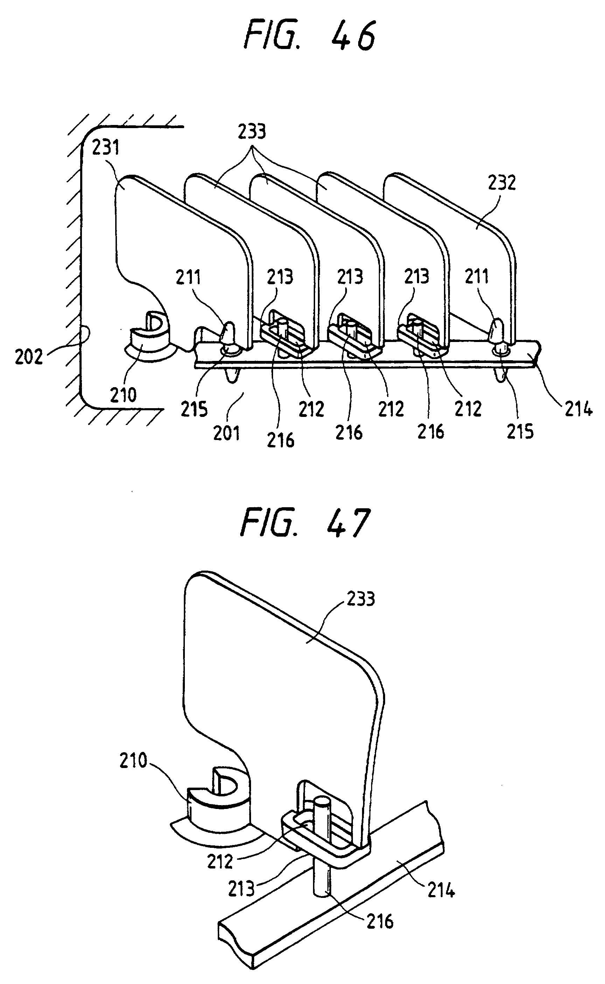

Figs. 1 to 45 are omitted;
Fig. 46 is a perspective view showing part of the blow-outlet of an air-direction adjusting apparatus in an air-conditioning equipment;
Fig. 47 is an enlarged perspective view of part of the apparatus;
Fig. 48 is a cross-sectional plan view of the blow-outlet in another embodiment of the apparatus;
Fig. 49 is an enlarged perspective view of part of the apparatus of Fig. 48;
Fig. 50 is a front view of a vane;
Fig. 51 is an enlarged view in section along line X-X in Fig. 50;
Fig. 52 is a perspective view of a vane in another embodiment;
Fig. 53 is a view showing an example of the section along line Y-Y in Fig. 52;
Fig. 54 is a view showing another example of the section along line Y-Y in Fig. 52;
Fig. 55 is a view showing another example of the section along line Y-Y in Fig. 52;
Fig. 56 is a perspective view of a vane, showing a pivotal bearing;
Fig. 57 is a perspective view of the sleeve to be fitted in the pivotal bearing of Fig. 56;
Fig. 58 is a perspective view of the shaft erected on the inner wall of the blow-outlet correspondingly to the vane of Fig. 56;
Fig. 59 is a vertically sectional view showing the assembled state of pivotal bearing of Fig. 56, the sleeve of Fig. 57, and the shaft of Fig. 58;
Fig. 60 is a perspective view showing air-conditioning equipment according to the prior art;
Fig. 61 is a cross-sectional view showing the prior art air-conditioning equipment;
Fig. 62 is a vertically sectional view showing the prior art air-conditioning equipment;
Figs. 63 and 64 are omitted;
Fig. 65 is a cross-sectional view showing the air-direction changing apparatus of a prior art air conditioner; and
Fig. 66 is an explanatory view of the operation state of the apparatus of Fig. 65.

In the drawings, the reference numeral 201 represents a blow-outlet; 202, an inner wall of the blow-outlet 201; 231, a first-kind vane disposed to be near the inner wall 201 which is one side of the blow-outlet 1; and 210, a C-shaped pivotal bearing shaped obtained by cutting one side of a ring and provided in the vicinity of one end of an edge portion on one side of the first-kind vane 231.

The reference numeral 211 represents a rotational bearing provided on the other-end side of the edge portion in which the pivotal bearing 210 of the first-kind vane 231 is provided; and 232, a second-kind vane disposed so as to be opposite to the first-kind vane 231 among one group of vanes and formed in the same manner as the first-kind vane 231 so that the second-kind vane is provided with both a pivotal bearing 210 and a rotational bearing 211 but the two bearings are arranged at a shorter distance than the distance in the first-kind vane 231.

The reference numeral 233 represents a plurality of third- kind vanes provided separately between the first-kind vane 231 and the second-kind vane 232. The third-kind vanes are formed in the same manner as the first-kind vane 231 and provided with pivotal bearings 210 provided in positions corresponding to the pivotal bearing 210 of the first-kind vane 231, each of the third-kind vanes being provided with an engagement portion 213 formed on the other-end side of an edge portion where the pivotal bearing 210 is disposed and having an elongated hole (slot) 212 along the length of the edge portion.

The reference numeral 214 represents a connection arm disposed along end portions opposite to the pivotal bearings, of the first-, second- and third-kind vanes 231, 232 and 233. The connection arm has connection shafts 215 provided at its opposite end portions so as to be pivotally held by the rotational bearings 211 of the first- and second-kind vanes 231 and 232 respectively, and intermediate connection shafts 216 provided at its intermediate portion so as to be movably fitted into the elongated holes 212 of the engagement portions 213 of the third- kind vanes 233 respectively.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. That is, the respective end portions opposite to the pivotal bearings 210, of the first-, second- and third-kind vanes 231, 232 and 233 are engaged with the connection arm 214. Particularly the end portions of the third-kind vanes 233 are engaged with the connection arm 214 by the intermediate connection shafts 216 movably fitted into the elongated holes 212 of the engagement portions 213.

Accordingly, the first-, second- and third-kind vanes 231, 232 and 233 are moved respectively in accordance with the lengthwise movement of the connection arm 214 so as to be disposed in inclined posture in the same manner as in the case of Fig. 66.

It is therefore unnecessary that the third-kind vanes 233 are produced while the distances between the pivotal bearings 210 and the engagement portions 213 are successively changed in accordance with the positions of the arrangement of the third- kind vanes 233. Accordingly, the third-kind vanes 233 can be produced easily, so that the air-direction adjusting apparatus in the air-conditioning equipment can be assembled up by simple work.

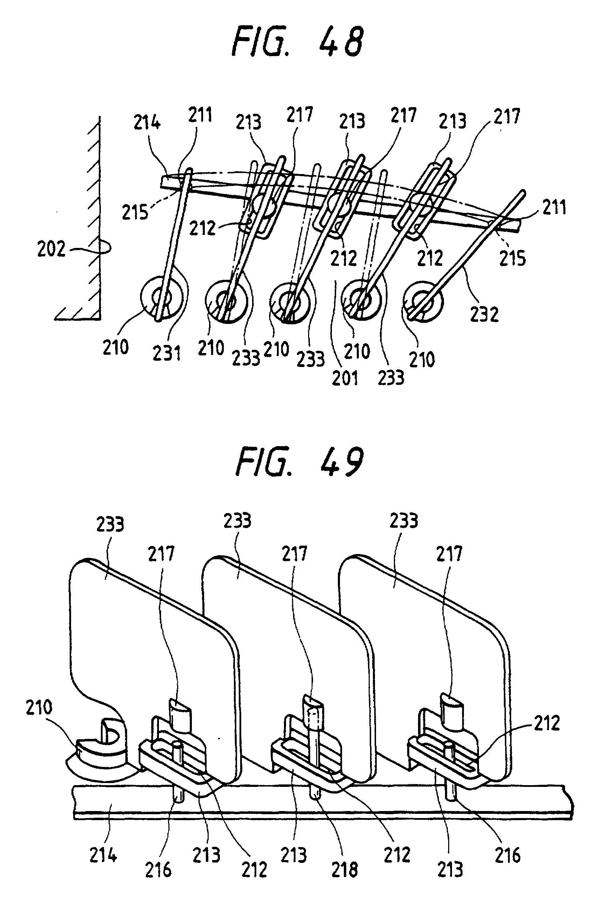

Figs. 48 and 49 are views showing another embodiment.

Fig. 48 is a cross-sectional plan view of a blow-outlet; and Fig. 49 is an enlarged perspective view of important part of Fig. 48. The other structure in Figs. 48 and 49 is the same as that in Fig. 65. In the drawings, the reference numeral 201 represents a blow-outlet; 202, an inner wall of the blow-outlet 201; 231, a first-kind vane disposed to be near the inner wall 202 which is one side of the blow-outlet 201; and 210, a C-shaped pivotal bearing obtained by cutting one side of a ring and provided to be near one end of an edge portion on one side of the first-kind vane 231.

The reference numeral 211 represents a rotational bearing provided on the other-end side of the edge portion in which the pivotal bearing 210 of the first-kind vane 231 is provided; and 232, a second-kind vane disposed so as to be opposite to the first-kind vane 231 among one group of vanes and formed in the same manner as the first-kind vane 231 so that the second-kind vane is provided with both a pivotal bearing 210 and a rotational bearing 211 but the two bearings are arranged at a shorter distance than the distance in the first-kind vane 231.

The reference numeral 233 represents a plurality of third- kind vanes provided separately between the first-kind vane 231 and the second-kind vane 232. The third-kind vanes are formed in the same manner as the first-kind vane 231 and provided with pivotal bearings 210 provided in positions corresponding to the pivotal bearing 210 of the first-kind vane 231, each of the third-kind vanes being provided with an engagement portion 213 formed on the other-end side of an edge portion where the pivotal bearing 210 is disposed and having an elongated hole (slot) 212 along the length of the edge portion. The third-kind vanes are further provided with bearing portions 217 provided just above the elongated holes 212, respectively.

The reference numeral 214 represents a connection arm disposed along end portions opposite to the pivotal bearings 210, of the first-, second- and third-kind vanes 231, 232 and 233.

The connection arm 214 has connection shafts 215 provided at its opposite end portions so as to be pivotally held by the rotational bearings 211 of the first- and second-kind vanes 231 and 232 respectively, intermediate connection shafts 216 provided at its intermediate portion so as to be movably fitted into the elongated holes 212 of the engagement portions 213 of the third- kind vanes 233 respectively, and an intermediate joint shaft 218 inserted into the elongated hole 212 of the engagement portion 213 of the third-kind vane 233 disposed in an intermediate portion of the third-kind vanes 233 and pivotally held by the bearing portion 217 of the third-kind vane 233.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. That is, the respective end portions opposite to the pivotal bearings 210, of the first-, second- and third-kind vanes 231, 232 and 233 are engaged with the connection arm 214. Particularly the end portions of the third-kind vanes 233 are engaged with the connection arm 214 by the intermediate connection shafts 216 movably fitted into the elongated holes 212 of the engagement portions 213. Further, the third-kind vane 233 disposed in an intermediate portion of the third-kind vanes 233 is connected to the connection arm 214 by the intermediate joint shaft 218 pivotally held by the bearing portion 217 thereof. Accordingly, the first-, second- and third-kind vanes 231, 232 and 233 are moved respectively in accordance with the lengthwise movement of the connection arm 214 so as to be disposed in inclined posture in the same manner as in the case of Fig. 66.

It is therefore unnecessary that the third-kind vanes 233 are produced while the distances between the pivotal bearings 210 and the engagement portions 213 are successively changed in accordance with the positions of the arrangement of the third- kind vanes 233. Accordingly, the third-kind vanes 233 can be produced easily, so that the air-direction adjusting apparatus in the air-conditioning equipment can be assembled up by simple work.

Further, in the embodiment of Figs. 48 and 49, because the third-kind vane 233 disposed in an intermediate portion of the third-kind vanes 233 is connected to the connection arm 214 through the intermediate joint shaft 218 pivotally held by the bearing portion 217, it is possible to prevented the occurrence of the disadvantage in that the connection arm 214 is distorted by air blowing as represented by the chained line in Fig. 48 to shift the inclination angle of the third-kind vanes 233 from a predetermined value to thereby spoil the air-direction changing effect.

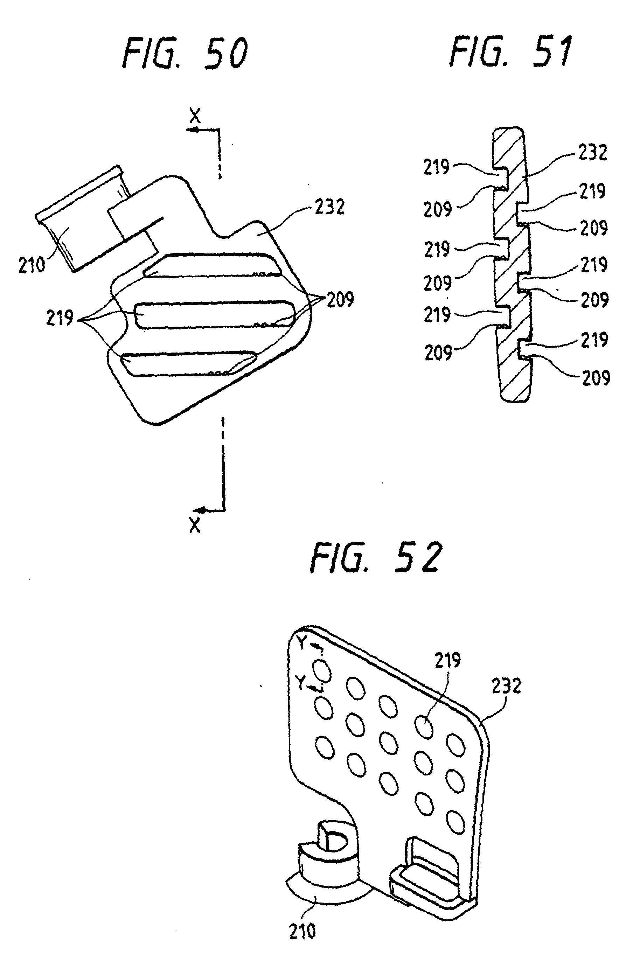

Figs. 50 and 51 are views showing an embodiment of the present invention. Fig. 50 is a front view of a vane; and Fig. 51 is an enlarged section taken along the line X-X in Fig. 50. The other structure in Figs. 50 and 51 is the same as that in Fig. 65. In the drawings, the reference numeral 232 represents a second-kind vane disposed in the center side of the blow-outlet 201; and 210, a C-shaped pivotal bearing obtained by cutting one side of a ring and disposed in the one-end side of an edge portion which is one side of the second-kind vane 232.

The reference numeral 219 represents dew-receiving cavities provided in opposite plane portions respectively of the second- kind vane 232 and constituted by a plurality of dew-receiving horizontal grooves arranged separately in parallel to each other and each having a width of about 3 mm and a depth of about 0.5 mm; and 209, dew generated in the second-kind vane 232 and deposited onto the dew-receiving cavities 219.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. In this case, a narrow gap between second-kind vanes 232 is formed in the center portion where the two, left and right groups of vanes face to each other. For this reason, air 207 blown out through this gap as shown in Fig. 66 is weak so that secondary air 208 in the neighborhood of the air 207 is involved. As a result, dew 209 is generated in the second-kind vanes 232 and drops down. The thus generated dew 209 is, however, reserved in the dew-receiving cavities 219, so that the dropping of dew 209 can be prevented.

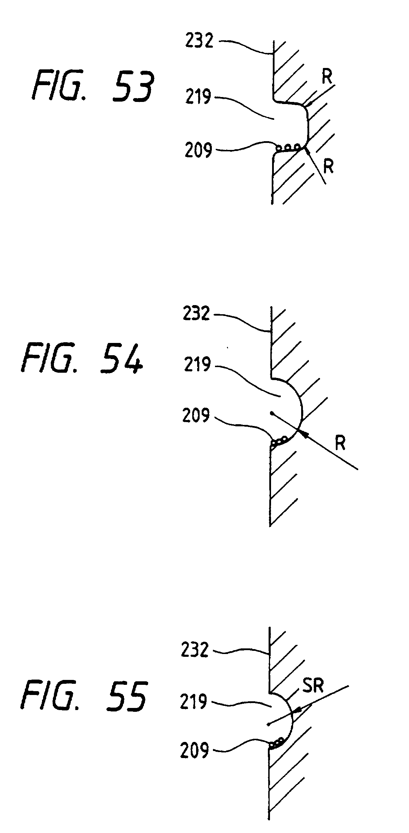

Further, by applying the embodiment shown in Figs. 50 and 51, air-direction adjusting apparatuses in an air-conditioning equipment can be configured easily as shown in Figs. 52 to 55. That is, Fig. 52 is a perspective view corresponding to Fig. 50; and Figs. 53 to 55 are views showing sections taken along the line Y-Y in Fig. 52. In the drawings, the reference numeral 219 represents dew-receiving cavities provided in opposite plane portions respectively of the second-kind vane 232 to form various kinds of cross-sectional shapes as shown in Figs. 53 to 55 and constituted by a plurality of dew-receiving concave portions arranged separately in parallel to each other; and 209, dew generated in the second-kind vane 232 and deposited onto the dew- receiving cavities 219.

Also in the structures shown in Figs. 52 to 55, dew 209 generated in the second-kind vane 232 is reserved in the dew-receiving cavities 19. Accordingly, though the detailed description is omitted, it is apparent that the same effect as in the embodiment shown in Figs. 50 and 51 can be achieved in the structures shown in Figs. 52 to 55.

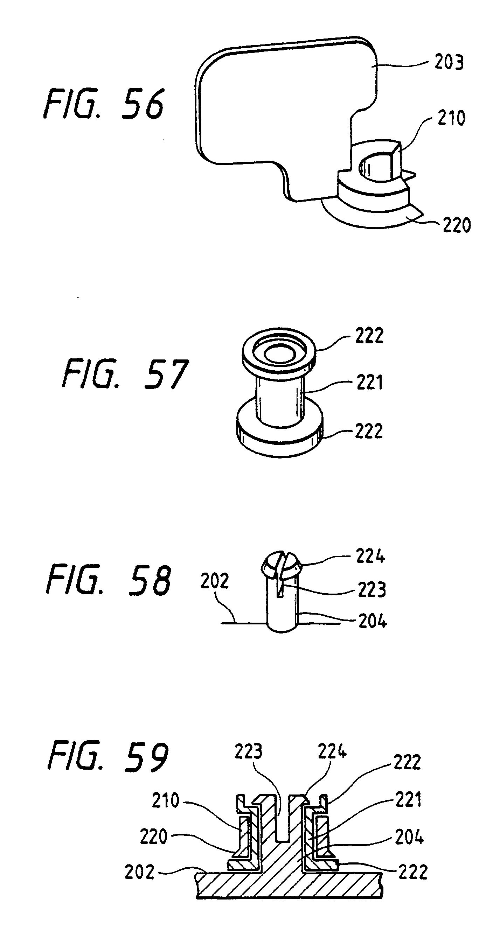

Fig. 56 is a perspective view of a vane; Fig. 57 is a perspective view of a sleeve fitted into the pivotal bearing depicted in Fig. 56; Fig. 58 is a perspective view of a shaft erected from the inner wall of the blow-outlet; and Fig. 59 is a vertical section showing the state in which the pivotal bearing of Fig. 56, the sleeve of Fig. 57 and the shaft of Fig. 58 are assembled. The other structure in Figs. 56 to 59 is the same as that in Fig. 65. In the drawings, the reference numeral 210 represents a C-shaped pivotal bearing obtained by cutting one side of a ring. The pivotal bearing 210 is provided in the one- end side of an edge portion on one side of the vane 203 and provided with a flange 220 at its lower side.

The reference numeral 221 represents a sleeve having flanges 222 at its upper and lower portions respectively and fitted into the pivotal bearing 210 so as to be held by the pivotal bearing 210; and 204, a shaft provided so as to be erected from the inner wall 202 of the blow-outlet 201 and fitted into the sleeve 221. In the upper end portion of the shaft 204, there are provided a groove 223 and a claw 224 projected to prevent the dropping-out of the sleeve 221.

In the air-direction adjusting apparatus in the air-conditioning equipment configured as described above, vanes 203 are assembled into two, left and right groups as shown in Fig. 66. The two groups of vanes are arranged so as to be rotatable so that the lower sides are far from each other. The respective vanes 203 are pivotally held, through the sleeves 221 and the pivotal bearings 210, by the shafts 204 erected from the inner wall 202 of the blow-outlet 201 as shown in Fig. 59.

For this reason, the respective vanes 203 make rotating operations smoothly with respect to the shafts 204. Further, the vanes 203 are held by the flanges 220 even in the case where loads perpendicular to the shafts 204 act on the vanes 203 respectively. Accordingly, the pivotal bearings 210 and the sleeves 221 can be assembled in advance, so that assembling can be performed easily. Further, the rotating operations of the vanes 203 at the pivotally mounted portions thereof can be smoothened. In addition, noise at the pivotally mounted portions is reduced, so that quiet environment can be provided.

## Claims

1. An air-direction adjusting apparatus in an air-conditioning equipment, which comprises two sets of guide vanes (231-233) which are disposed respectively to the left and right of a blow-outlet (201) and which are rotatable in opposite directions to thereby change the air direction, whereby a narrow space is formed between the two sets of vanes, **characterised in that** at least the end guide vanes (232) which are next to each other are provided with a plurality of dew-receiving cavities (219) in their surfaces.

2. Apparatus as claimed in claim 1, in which dew-receiving cavities (219) are arranged on opposite sides of one and the same guide vane (232).

3. Apparatus as claimed in claim 2, in which the cavities (219) on one side of the said guide vane (232) are staggered with respect to the cavities (219) on the other side.

4. Apparatus as claimed in any of claim 1 to 3, in which the dew-receiving cavities (219) are elongate.

5. Apparatus as claimed in claim 4, in which the elongate cavities (219) extend in the horizontal direction.

6. Apparatus as claimed in claim 4 or 5, in which the elongate cavities (219) are of rectangular cross-section.

7. Apparatus as claimed in any of claims 4 to 6, in which the elongate cavities (219) are about 0.5 mm deep.

8. Apparatus as claimed in any of claims 1 to 3, in which the dew-receiving cavities (219) comprise concave recesses.

9. Apparatus as claimed in claim 8, in which the concave recesses (219) are arranged in parallel rows.

10. Apparatus as claimed in any preceding claim, in which each set of guide vanes (231-233) comprises a guide vane (231) of a first kind at one end, a guide vane (232) of a second kind at the other end, and guide vanes (233) of a third kind intermediate the two end guide vanes (231,232), there being non-sliding connections (211/215) between the two end guide vanes (231,232) and a link (214), connecting all the guide vanes (231-233) of the set.

11. Apparatus as claimed in claim 10, in which each intermediate guide vane (233) has a slot (212) in which a shaft (216) on the link (214) is received to connect the guide vane (233) to the link (214).

12. Apparatus as claimed in claim 11, in which one shaft (218) on the link (214) is received in a bearing portion (217) of one of the intermediate guide vanes (233).

13. Apparatus as claimed in any preceding claim, in which each vane (231-233) has a C-shaped annular pivotal bearing (210) and a sleeve (221) fitted into the bearing (210) so as to be held by the bearing, a shaft (204) extending from an inner wall (202) of the blow-outlet (201) being inserted into the sleeve (221), the shaft (204) having claws (224) which project from the upper end portion of the shaft so as to retain the sleeve (221).

## Patentansprüche

1. Reguliervorrichtung für die Luftströmungsrichtung in einer Klimaanlage, die zwei Sätze von Leitschaufeln (231-233) aufweist, die entsprechend links und rechts von einer Ausströmöffnung (201) angeordnet sind, und die in entgegengesetzten Richtungen drehbar sind, um dadurch die Luftströmungsrichtung zu verändern, wodurch ein schmaler Zwischenraum zwischen den zwei Sätzen von Schaufeln gebildet wird, **dadurch gekennzeichnet, daß** mindestens die Endleitschaufeln (232), die einander am nächsten sind, mit einer Vielzahl von tauaufnehmenden Hohlräumen (219) in ihren Oberflächen versehen sind.

2. Vorrichtung nach Anspruch 1, bei der die tauaufnehmenden Hohlräume (219) auf gegenüberliegenden Seiten ein und derselben Leitschaufel (232) angeordnet sind.

3. Vorrichtung nach Anspruch 2, bei der die Hohlräume (219) auf einer Seite der Leitschaufel (232) mit Bezugnahme auf die Hohlräume (219) auf der anderen Seite versetzt sind.

4. Vorrichtung nach einem der Ansprüche 1 bis 3, bei der die tauaufnehmenden Hohlräume (219) länglich sind.

5. Vorrichtung nach Anspruch 4, bei der sich die länglichen Hohlräume (219) in der horizontalen Richtung erstrecken.

6. Vorrichtung nach Anspruch 4 oder 5, bei der die länglichen Hohlräume (219) einen rechteckigen Querschnitt aufweisen.

7. Vorrichtung nach einem der Ansprüche 4 bis 6, bei der die länglichen Hohlräume (219) etwa 0,5 mm tief sind.

8. Vorrichtung nach einem der Ansprüche 1 bis 3, bei der die tauaufnehmenden Hohlräume (219) konkave Aussparungen aufweisen.

9. Vorrichtung nach Anspruch 8, bei der die konkaven Aussparungen (219) in parallelen Reihen angeordnet sind.

10. Vorrichtung nach vorhergehenden Ansprüchen, bei der jeder Satz . von Leitschaufeln (231-233) aufweist: eine Leitschaufel (231) einer ersten Art an einem Ende; eine Leitschaufel (232) einer zweiten Art am anderen Ende; und Leitschaufeln (233) einer dritten Art zwischen den zwei Endleitschaufeln (231, 232), wobei nichtverschiebbare Verbindungen (211/215) zwischen den zwei Endleitschaufeln (231, 232) und ein Verbindungsglied (214) vorhanden sind, das alle Leitschaufeln (231-233) des Satzes verbindet.

11. Vorrichtung nach Anspruch 10, bei der jede dazwischenliegende Leitschaufel (233) einen Schlitz (212) aufweist, in dem eine Welle (216) im Verbindungsglied (214) aufgenommen wird, um die Leitschaufel (233) mit dem Verbindungsglied (214) zu verbinden.

12. Vorrichtung nach Anspruch 11, bei der eine Welle (218) auf dem Verbindungsglied (214) in einem Lagerabschnitt (217) einer der dazwischenliegenden Leitschaufeln (233) aufgenommen wird.

13. Vorrichtung nach vorhergehenden Ansprüchen, bei der jede Schaufel (231-233) ein C-förmiges, ringförmiges, drehbares Lager (210) und eine Buchse (221) aufweist, die in das Lager (210) eingepaßt ist, damit sie vom Lager gehalten wird, wobei eine Welle (204), die sich von einer Innenwand (202) der Ausströmöffnung (201) aus erstreckt, in die Buchse (221) eingesetzt wird, wobei die Welle (204) Klauen (224) aufweist, die aus dem oberen Endabschnitt der Welle vorstehen, um so die Buchse (221) festzuhalten.

## Revendications

1. Appareil d'ajustement de la direction de soufflage d'air d'un équipement de climatisation, qui comprend deux jeux d'aubes de guidage (231 à 233) qui sont disposées respectivement vers la gauche et vers la droite d'un orifice de décharge de soufflage (201) et qui sont mobiles en rotation dans des sens opposés pour changer ainsi la direction de l'air, un espace étroit étant formé ainsi entre les deux jeux d'aubes, **caractérisé en ce qu'**au moins les aubes de guidage d'extrémité (232) qui sont proches les unes des autres sont munies d'une pluralité de cavités de réception de rosée (219) dans leurs surfaces.

2. Appareil selon la revendication 1, dans lequel les cavités de réception de rosée (219) sont disposées sur les côtés opposés d'une seule et même aube de guidage (232).

3. Appareil selon la revendication 2, dans lequel les cavités (219) se trouvant d'un côté de ladite aube de guidage (232) sont disposées en quinconce par rapport aux cavités (219) se trouvant de l'autre côté.

4. Appareil selon l'une quelconque des revendications 1 à 3, dans lequel les cavités de réception de rosée (219) sont allongées.

5. Appareil selon la revendication 4, dans lequel les cavités allongées (219) s'étendent selon la direction horizontale.

6. Appareil selon la revendication 4 ou 5, dans lequel les cavités allongées (219) ont une section transversale rectangulaire.

7. Appareil selon l'une quelconque des revendications 4 à 6, dans lequel les cavités allongées (219) ont une profondeur d'environ 0,5 mm.

8. Appareil selon l'une quelconque des revendications 1 à 3, dans lequel les cavités de réception de rosée (219) comprennent des évidements concaves.

9. Appareil selon la revendication 8, dans lequel les évidements concaves (219) sont disposés en rangées parallèles.

10. Appareil selon l'une quelconque des revendications précédentes, dans lequel chaque jeu d'aubes de guidage (231 à 233) comprend une aube de guidage (231) d'une première sorte à une extrémité, une aube de guidage (232) d'une deuxième sorte à l'autre extrémité et des aubes de guidage (233) d'une troisième sorte à une position intermédiaire entre les deux aubes de guidage d'extrémité (231, 232), des connexions sans glissement (211/215) se trouvant entre les deux aubes de guidage d'extrémité (231, 232) et une barre de liaison (214) reliant toutes les aubes de guidage (231 à 233) du jeu.

11. Appareil selon la revendication 10, dans lequel chaque aube de guidage intermédiaire (233) possède une fente (212) dans laquelle est reçu un arbre (216) sur la barre de liaison (214) de façon à raccorder l'aube de guidage (233) à la barre de liaison (214).

12. Appareil selon la revendication 11, dans lequel un arbre (218) sur la barre de liaison (214) est reçu dans une partie formant palier (217) d'une des aubes de guidage intermédiaires (233).

13. Appareil selon l'une quelconque des revendications précédentes, dans lequel chaque aube (231 à 233) comporte un palier pivotant annulaire en forme de C (210) et une boîte de glissement (221) emboîtée dans le palier (210) de façon à être maintenue par le palier, un arbre (204) s'étendant depuis une paroi intérieure (202) de l'orifice de décharge de soufflage (201) étant inséré dans la boîte de glissement (221), l'arbre (204) comportant des griffes (224) qui font saillie de la partie d'extrémité supérieure de l'arbre de façon à retenir la boîte de glissement (221).
